# EUROPEAN PATENT APPLICATION

(11) **EP 4 530 275 A2**
(43) Date of publication of application: **02.04.2025**
(21) Application number: 24203667.1
(22) Date of filing: 30.09.2024
(51) Int. Cl.: C04B 28/02, C04B 40/06, E02B 3/04, C04B 41/65, C04B 111/74, C04B 111/94, C04B 111/72

(54) **SUSTAINABLE SELF-HEALING MARINE CONCRETE AND METHOD THEREOF**

(30) Priority: 28.09.2023 PT 2023118947
(71) Applicant: Universidade do Minho, 4704-553 Braga (PT); Domingos Da Silva Teixeira, S.A., 4700-727 Braga (PT)
(72) Inventor: BAPTISTA PEREIRA, Ana Isabel, 4800-058 GUIMARÃES (PT); BORGES PEREIRA, Eduardo Nuno, 4800-058 GUIMARÃES (PT); DA SILVA MIRANDA, Tiago Filipe, 4800-058 GUIMARÃES (PT); MESQUITA RODRIGUES, Mafalda Margaride, 4470-273 MAIA (PT)
(74) Representative: Patentree

(57) **Abstract**

The present disclosure relates to a sustainable self-healing marine concrete comprising a concrete matrix comprising cementitious material; at least 50% (w/w) of electrically conductive material; wherein the electrically conductive material is in the form of aggregates, fibers; at least 5% (w/w) of water; at least 0.10% (w/w) of additive and fine additions. It also disclosed a method of regenerating the self-healing marine concrete and a method for producing self-healing marine concrete.

## Description

### TECHNICAL FIELD

The present disclosure relates to a sustainable self-healing marine concrete, as well as the method of regenerating the self-healing marine concrete. Specifically, the present disclosure relates to sustainable highly electrically conductive concrete and a method of regenerating said self-healing marine concrete. Particularly, the method comprises electrodeposition where minerals naturally present in seawater are used to heal damaged concrete, enhancing its durability and performance over time. Moreover, the present disclosure is biocompatible, making it environmentally friendly and sustainable.

### BACKGROUND

Concrete has been the most widely used construction material in recent decades, primarily due to its excellent mechanical properties and versatility in different environments. However, concrete is susceptible to various degradation issues mostly due to its proneness to cracking, often requiring significant maintenance and repair efforts. This need is particularly pronounced in remote structures such as marine constructions, where access is limited and challenging.

The performance of concrete throughout its life cycle is determined by its interaction with the environment. Assessing the effectiveness of self-healing using various approaches has gained increased appeal due to its minimal work requirements and investment, particularly for its ability to enhance concrete durability, reduce maintenance and repair costs throughout its life cycle [1-15].

Additionally, it proves to be highly beneficial in mitigating construction issues that may arise, such as cracks resulting from various causes [1-15]. Rapid self-repair of these cracks proves to be highly interesting as the concrete is more susceptible to aggressive agents through these small openings, rather than through the concrete matrix itself. Due to expansion, contraction, and permeability, cracks increase in size and number, necessitating periodic inspection and maintenance [1]. However, implementing strategies for regular inspection and maintenance can be challenging particularly in large-scale structures and/or when the damage location is difficult to access for repairs.

Self-healing is seen as the ability of concrete to repair cracks on its own [1-15]. Self-healing is assessed through the desired quality criteria in relation to the original form. In other words, self-healing can involve sealing and protecting the internal layers of the material from external aggressive agents, restoring the original mechanical strength, or even gaining strength, which is challenging. It is a useful technique for enhancing continuous structural safety and service durability.

More serious studies emerged mainly from the 1990s, although there were some scientific developments in the 1980s however, limited in number.

Considering the most recent literature, self-healing in conventional concretes can be achieved through three types of processes such as natural, biological, and chemical processes [1].

Regarding natural processes, the formation of calcium carbonate and calcium hydroxide is mentioned, as well as crack blocking through impurities in water, hydration reaction of unreacted cement, and expansion [1]. Among all the natural processes, the formation of calcium carbonate and calcium hydroxide proves to be the most effective methods for concrete repair. However, the formation of calcium carbonate possibly only facilitates healing for later ages, which can be inconvenient for cracks occurring at younger ages [1].

In biological processes, microorganisms such as bacteria are commonly used to promote self-repair in concretes through the precipitation of polymorphic-iron-aluminum-silicate and calcium carbonate, which are the most important processes in these biological self-healing methods [1]. However, there are still some challenges despite being a promising technique, as these methods are not yet fully viable due to various factors that have not been well understood. Although there are different bacteria that can be used, which are easy to use and isolate, and several methods have been described by various authors, they are not as efficient when exposed to severe conditions such as high temperature, pH, and low water levels [1].

Chemical processes refer to artificial healing by injecting chemical components into the crack for repair, such as glue [1]. Two application methods have been described in the literature. One method is considered as the active mode, which uses hollow pipettes and networks of vessels containing glue; and another method is referred to as the passive mode, where hollow pipettes, capsules, or vessel networks are used to distribute the glue [1].

In 1981 and 1984, Wolf H. Hilbertz demonstrated the potential application of electrodeposited minerals as a construction material and the repair of fractured reinforced concrete structures through mineral accretion, respectively [15, 16]. However, the latter invention is only feasible if the fracture exposes the steel bar, as conventional concrete lacks the required electrical conductivity to self-heal other types of damage using water electrolysis. In this particular invention, reinforced concrete is utilized, which consists of conventional concrete and steel bars. However, being concrete non-electrically conductive, it presents certain limitations in repairing certain types of cracks and damage, at different ages.

None of the methods described in the literature has addressed the specific application of self-healing concrete in marine conditions, particularly the use of sustainable electrically conductive concrete to achieve self-healing properties for any concrete damage and age. Marine and offshore structures face unique challenges, experiencing more severe and premature degradation compared to typical concrete structures. These challenges arise due to factors such as remote locations, corrosive environments, varying mechanical forces, and biological fouling.

The term "sustainable self-healing marine concrete" refers to an innovative type of concrete specifically engineered for marine environments. This concrete possesses a high level of electrical conductivity and is more sustainable because it incorporates waste materials in its composition, making it both capable of advanced functional characteristics such as self-healing under marine conditions and environmentally friendly. Additionally, it provides cathodic protection, also through its electrical properties.

The term "self-healing marine concrete" refers to a type of concrete with high electrical conductivity, enabling the natural precipitation of minerals found in seawater through an imposed electrolytic process. These unique characteristics facilitate the healing of damaged marine concrete, thereby promoting its restoration and enhancing its durability and performance throughout its life cycle, while maintenance and repair costs are significantly reduced. Additionally, it enables self-healing for cracks to occur at both younger and older ages, as well as for cracks with varying widths and depths. This advantage and innovation set it apart from the techniques described in recent literature.

The term "self-healing marine concrete" also refers to a specific type of concrete that possesses high electrical conductivity, enabling cathodic protection for the concrete structure. This distinctive attribute renders it particularly suitable for ensuring the long-term preservation of structures, particularly in harsh marine environments known for their corrosive nature, where traditional concrete structures are susceptible to severe deterioration. This innovative approach is not also addressed by Wolf H. Hilbertz in its patent related to the repair of fractured reinforced concrete structures through mineral accretion nor in the current literature.

The maintenance and repair of conventional concrete structures can be costly, time-consuming, and environmentally inefficient, particularly in marine conditions. These challenges have driven the research and development of innovative materials and technologies aimed at improving concrete's performance and reducing its environmental impact.

Sustainable self-healing marine concrete represents a groundbreaking advancement in the field of construction materials, especially for the marine environment. It combines principles of sustainability with cutting-edge self-healing mechanisms to create a more resilient and eco-friendlier alternative to traditional concrete. This novel approach seeks to address the drawbacks of conventional concrete by introducing unique components and functionalities, particularly for marine applications.

These facts are disclosed to illustrate the technical problem addressed by the present disclosure.

### GENERAL DESCRIPTION

The present disclosure relates to a sustainable self-healing marine concrete, as well as the method of regenerating the self-healing marine concrete.

A marine concrete is also known as offshore concrete or underwater concrete. Particularly is a type of concrete used in construction projects that are exposed to harsh marine environments. This type of concrete can be used in bridges, ports, harbors, offshore oil and gas platforms, coastal protection structures, underwater tunnels and artificial reefs. It is important that these structures withstand the corrosive effects of saltwater, wave action, and other environmental factors.

An aspect of the present disclosure relates to a self-healing marine concrete composition comprising waste materials, more particularly aggregates, fibers and fine additions. The production of the self-healing marine concrete composition of the present disclosure contributes to sustainability by reusing residues. In the event of a damage in the concrete, the application of an electrical current facilitates the recovery of the damaged area, promoting the restoration of the concrete's integrity.

Seawater contains the majority of known chemical components, and the most abundant elements are sodium, magnesium, calcium, potassium and chloride. Electrolytic processes provide a specific method for depositing minerals naturally found in seawater onto suitable surfaces, with the condition that the material is submerged in seawater and is highly electrically conductive. By applying a defined electrical potential between electrodes, positive ions are deposited at the cathode, while negative ions are deposited at the anode. In this electrolytic process, the primary materials precipitated are mainly magnesium hydroxide and calcium carbonate, and the last possessing a compressive strength similar to conventional concrete. This characteristic makes them well-suited for healing the damaged concrete structure. Moreover, calcium carbonate is a prominent component found in coral reefs, shells, mollusks, and other marine organisms, making it an attractive layer to establish a natural synergy between the structure and the marine environment, as noted by other researchers, helping to mitigate biological problems usually found in conventional marine structures. The formation of this natural layer with optimal mechanical properties is influenced by variables such as temperature and the presence of marine organisms. Instead of viewing marine organisms as antagonists as typical to conventional marine structures, they can be seen as allies, potentially enhancing structure performance once they contribute actively to improve the mechanical characteristics of the material formed by electrodeposition.

One of the key features that sets this advanced material apart from the methods described in the literature is its intrinsic ability to autonomously and continuously repair any type of crack, stress or deformation induced, including micro-cracks that inevitably occur during the concrete lifespan, and frequently are difficult to repair. This capability effectively mitigates major structural problems usually caused by crack extension, contraction, and when exposed to damaging environments like seawater. The presence of an existing crack induces a significant electric potential, which triggers the electrodeposition of minerals onto the crack, making crack healing a priority. By incorporating electrically conductive materials and immersing the concrete in an electrolyte solution, such as seawater, the concrete can continuously heal and restore its structural integrity. Consequently, this process not only extends its lifespan but also significantly reduces maintenance requirements. The duration of the repair could be considered unlimited as long as there is contact with seawater and access to energy. Additionally, it is expected that not only will the crack be sealed, but the material will also maintain, at least, its initial structural performance. Furthermore, there is a possibility that the material could even gain strength over time, as the hardening process of calcium carbonate under the described conditions is continuous, however dependent on temperature and the biological interaction of the structure.

In an embodiment, the electrically conductive material may be conductive waste, preferably conductive fibers and conductive aggregates. The fine additions can also be conductive such as electric arc furnace slag (EAFS) with different granulometry.

In an embodiment, the addition to the concrete of the present disclosure of conductive fiber and/or conductive aggregate improves the electrical properties of the concrete and consequently could enhance its durability, resistance to chemical attacks, and overall performance under adverse environmental conditions. This enhanced durability ensures a longer service life for infrastructure, leading to lower replacement and maintenance costs.

In an embodiment, the sustainable self-healing marine concrete comprises a concrete mixture containing a minimum of 50% (w/w) conductive materials, including aggregates, fibers and fine additions selected from fly ashes, electric arc furnace slag (EAFS) powder, recycled or not carbon powder and/or graphite or other conductive residues. The damaged concrete is healed through a process of mineral accretion, which is achieved by applying direct electric current to the concrete, inducing electrodeposition and facilitating the formation of a regenerated mineral layer. Furthermore, the electric properties of the concrete described in the present disclosure also induce cathodic protection of the structure.

An aggregate, in the context of construction and civil engineering, refers to a granular material that is used as a fundamental component in concrete, mortar, asphalt, and other construction mixes. Aggregates typically consist of particles such as sand, gravel, crushed stone, slag, recycled concrete, or other inert materials with various particle sizes.

Electrically conductive aggregates play a crucial role in the present disclosure to their ability to enhance the properties of the final product. The used aggregates have at least 30 % of the conductive material in its composition and are considered waste materials.

Electrically conductive aggregates consist of particles with a continuous grading, typically with a particle size of less than 50 mm. Metal particles are the most common type of electrically conductive material found in these aggregates. The measurement of the aggregates may be carried out in various ways and in this disclosure the measurement granulometry/particle size was carried out on the basis of the standard the granulometry analysis by mechanical sieving, namely the one described by EN 933-1:2012.

Electrically conductive fibers consist of recycled and/or industrial fibers, usually with a major size of less than 10 mm and a thickness of 2 mm. Carbon and metal fibers are the most common type of electrically conductive fiber.

The present disclosure relates to a sustainable self-healing marine concrete comprising a concrete matrix containing cementitious material;
at least 50% (w/w) of electrically conductive material; wherein the electrically conductive material is in the form of aggregate and fibers;
at least 5% (w/w) of water;
at least 0.10% (w/w) of additive; and
fine additions.

The self-healing marine concrete of the present disclosure aims to improve the durability and lifespan of concrete structures by allowing them to repair cracks and damage autonomously, without the need for human intervention.

In an embodiment, the fine addition is electrically conductive.

In an embodiment, the fine additions may be in the form of filler or powder.

In an embodiment, the fine addition is not electrically conductive.

In an embodiment, an amount of the fine addition is electrically conductive and another amount of the fine addition is not electrically conductive.

In an embodiment, the concrete has an electrical resistivity equal or lower than 0.3 Ω.*m*, preferably between 1.0 × 10⁻⁷ Ω. *m* and 0.3 Ω. *m*. A voltage is induced across each specimen using a power supply, and the electrical current is then measured. Based on the geometry of the electrodes, the dimensions of the specimen, and the obtained electrical current, the electrical resistivity is calculated.

In an embodiment, the amount of electrically conductive aggregates is from 50%(w/w) to 70%(w/w), preferably 55%(w/w) to 68 %(w/w), more preferably 62% to 65% (w/w).

In an embodiment, the conductive aggregate is selected from steel, iron, copper, aluminum, carbon, graphite or combinations thereof, preferably residues.

In an embodiment, the electrically conductive aggregate has a density from 1800 kg /m³ to 3580kg /m³. In this disclosure, the density was determined according to the standard EN 1097-6:2022.

In an embodiment, the conductive aggregate size is from 0-50 mm, preferably from 0-4mm. Measurement of the conductive aggregate size can be carried out in a number of ways, namely Microscopy; Laser Diffraction; Dynamic Light Scattering (DLS); Sedimentation; Electron Microscopy: Transmission Electron Microscopy (TEM) and Scanning Electron Microscopy (SEM); X-ray Diffraction (XRD), X-Ray fluorescence (XRF), among other. In this disclosure the conductive aggregate size was measured by X-Ray Fluorescence (XRF).

In an embodiment, at least 0.1% (w/w) of the electrically conductive material is electrically conductive fibers including carbon fibers, preferably recycled fibers, preferably at least 0.5% (w/w).

In an embodiment, the density of conductive fibers is from 1800 kg /m³ to 7850 kg /m³.

In an embodiment, the amount of the fine additions is at least 5% (w/w), preferably from 15% to 20% (w/w).

In an embodiment, the electrically conductive fibers are made of carbon, steel or any other conductive material, including electrically conductive recycled fibers.

In an embodiment, the fine additions are selected from a list comprising: fly ashes, electric arc furnace slag powder, carbon powder, graphite or mixtures thereof.

In an embodiment, the additives are selected from a list consisting of superplasticizer, plasticizer, and viscosity controller, or combinations thereof.

In an embodiment, the water is tap water or seawater.

The present disclosure also relates to a regenerating the self-healing marine concrete according to any of the previous claims, comprising:
immersing a fractured concrete in an electrolyte solution;
connecting the concrete to a direct current electric circuit;
subjecting the concrete to direct electric current to form a bioactive concrete and allow mineral accretion to form a mineral layer on the concrete damage and surface.

In an embodiment, the solution of electrolyte is artificial seawater or natural seawater.

In an embodiment, the concrete is subjected to direct electric current for at least 1 day.

In an embodiment, the electric circuit has a voltage between 1 volt and 100 volts and the electrical current is between 1 milli-amperes and 20 amperes. Preferably the electric current is from 1 milli- amperes to 8 amperes, preferably between 2 milli-amperes and 3 amperes.

In an embodiment, the electrolyte has a salinity equal to the salinity of seawater.

In an embodiment, the electric circuit is composed of an electric power supply with direct current, a highly electrically conductive concrete functioning as a cathode arranged to be connected to a conductive wire, and an electrode functioning as an anode.

In an embodiment, the electric circuit is a direct current electric circuit.

It is also disclosed a method for producing self-healing marine concrete, comprising the steps of:
mixing concrete matrix comprising cementitious material, water and additives to form a concrete mixture;
incorporating at least 50% (w/w) of electrically conductive material; wherein the electrically conductive material is in the form of aggregate and/or fibers into said concrete mixture to produce a self-healing concrete;
incorporating fine additions.

In an embodiment, the self-healing marine concrete composition of the present disclosure exhibits low electrical resistivity, maximum of 0.3 Ω. *m*. Preferably from 1.0 × 10⁻⁷Ω. *m* to 0.3 Ω. *m* .

In an embodiment, the self-healing marine concrete has the advantage of not only allowing current to flow through the concrete due to its high electrical conductivity, recovering damaged areas through the formation of a natural material, but also induces cathodic protection of the structure.

In an embodiment, the repair of any damage of the self-healing marine concrete of the present disclosure is possible via electrodeposition due to the high electrical conductivity of the concrete of the present disclosure.

In one embodiment, the concrete structure of the present disclosure can be catholically protected by the flow of electrical current through its conductive composition.

"Self-healing marine concrete structures" refer to structures that consist of a solid mass formed by the concretion or coalescence of individual particles of matter into a single body. These structures incorporate electrically conductive ingredients, including fibers and aggregates, and /or conductive fine additions which are embedded within the concrete. This combination of components works collectively to resist external forces and create a high level of electrical conductivity, enabling the structure to heal itself under specific conditions and induces cathodic protection.

In an embodiment, the solid mass portion of the structure is made by cement Portland or another binder to set and bind the entire mass, waste materials such as fly ash, electrically conductive powder and aggregates, micro electrically conductive fibers especially carbon fibers (recycled or not), tap water or seawater (artificial or not), and additives like superplasticizer, plasticizer or viscosity controller. The reinforcing material that helps to improve the electrical conductivity of the material are fibers, aggregates and other conductive additions such as EAFS powder, recycled or not carbon powder and/or graphite.

Another aspect of the present disclosure relates to a method of obtaining a self-healing property on a concrete structure, comprising the step of putting the conductive concrete in a volume of electrolyte, preferably seawater (artificial or natural). The conductive concrete is connected to a negative potential terminal of a direct current electrical power supply, behaving as a cathode. An anode is placed in the electrolyte in the vicinity to the conductive concrete structure and is connected to the positive terminal of the direct current electrical power supply. An electric field is formed by positive and negative charges for a time sufficient for accreting a solid mass of high strength electrodeposited mineral material over the damaged area thus forming a bioactive and bioprotective layer over the damaged concrete.

The method described offers the advantage of in-situ self-healing of damaged concrete, as well as providing structural cathodic protection and establishing a natural synergy with the marine environment, mimicking a natural process.

In an embodiment, the concrete material of the present disclosure may be used:
- to repair marine concrete structures, where the concrete is damaged;
- as part of more durable and resilient offshore and marine structures, as well as an alternative to the use of toxic substances for delaying degradation and biological incrustation, by promoting the formation of natural interfaces with the surrounding environment;
- as complex and resistant marine structures especially made to protect the coast from sea level rise;
- as a part of artificial reef structures, to protect and restore ecosystems against global changes, sedimentation and pollution.

In an embodiment, the method of obtaining an active healing over a fractured conductive concrete body with or without an electrically conductive cable embedded therein comprises the steps of:
- Placing a fractured conductive concrete structure in a volume of electrolyte;
- Placing an anode in the vicinity of the conductive concrete structure;
- Connecting the concrete structure to the negative potential terminal of an electrical power supply;
- Connecting the anode to the positive potential terminal of the electrical power supply;
- Settling a direct current between electrodes (cathode and anode) for a sufficient time to precipitate a solid mass of high strength electrodeposited mineral material over the damaged concrete to cover all the crack thus forming a resistant and bioactive surface.

In an embodiment, the voltage ranges between 1 volt and 100 volts per square meter area of cathodic material. Preferably the electric current is from 1 milli- amperes to 8 amperes, more preferably 2 milli-amperes to 3 amperes.

In an embodiment, the electrical current ranges from 1 milli-amperes to 20 amperes per square meter area of cathodic material.

In an embodiment, the electrolyte is a mineral-containing liquid, preferably natural or artificial seawater.

### BRIEF DESCRIPTION OF THE DRAWINGS

The following figures provide preferred embodiments for illustrating the disclosure and should not be seen as limiting the scope of invention.
**Figure 1** shows a theoretical qualitative model for electrochemical processes involved in the accretion of minerals.
**Figure 2** is a schematic diagram of an arrangement for self-healing marine concrete through electrodeposition following the present disclosure of a highly electrically conductive concrete submerged in seawater.
**Figure 3** shows the precipitation of minerals, such as calcium carbonate and magnesium hydroxide, on three concrete specimens through natural seawater electrolysis, specifically on the damaged area (approximately 0.3 mm crack) after 7 days.
**Figure 4** illustrates the precipitation of minerals, such as calcium carbonate and magnesium hydroxide, on concrete through natural seawater electrolysis, specifically on the crack, as viewed under a microscope (0.3 mm crack) after 7 days.
**Figure 5** shows three concrete specimens without electrolysis induction, on the damaged area (0.3 mm crack) after a period of 7 days.
**Figure 6** shows three concrete specimens without electrolysis induction, focusing on the crack, as viewed under a microscope (0.3 mm crack) after a period of 7 days.

### DETAILED DESCRIPTION

The present disclosure relates to a sustainable self-healing marine concrete, as well as the method of regenerating the self-healing marine concrete. The method comprises electrodeposition where minerals naturally present in seawater are used to heal damaged concrete, enhancing its durability and performance over time.

Moreover, the present disclosure is biocompatible, making it environmentally friendly and sustainable. In an embodiment, the self-healing marine concrete of the present disclosure is a sustainable material obtained by using residues in its composition.

In an embodiment, the process involves the electrodeposition of mineral materials to facilitate the healing of the concrete.

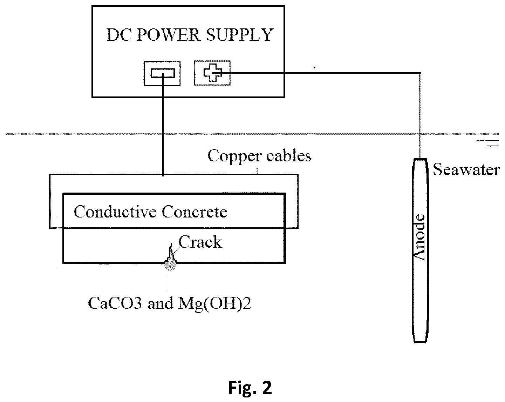

In an embodiment, an evaluation of the mineral accretion process was performed using a direct current (DC) power supply using a voltage range of 10 volts. The positive source was connected to platinum-coated cylindrical titanium electrode which functioned as the anode and the negative source was connected to a cable switch inside the concrete, which functioned as the cathode. The cable was added to ensure the electrical potential between all points in the concrete sample. Consequently, the electrical current flowed through the concrete, as shown in **Figure 2****.**

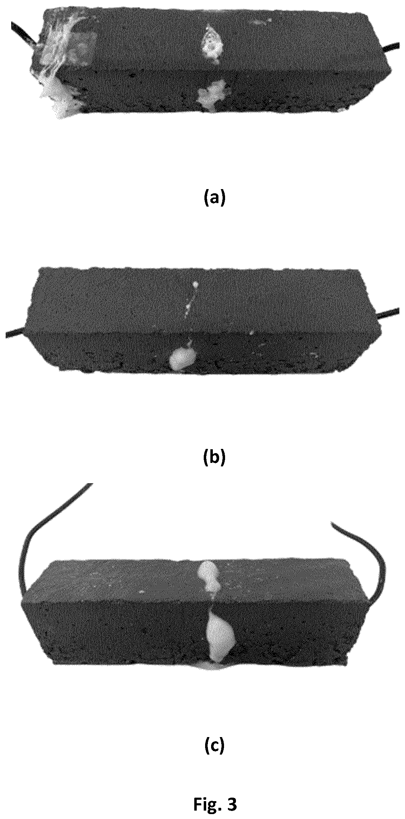

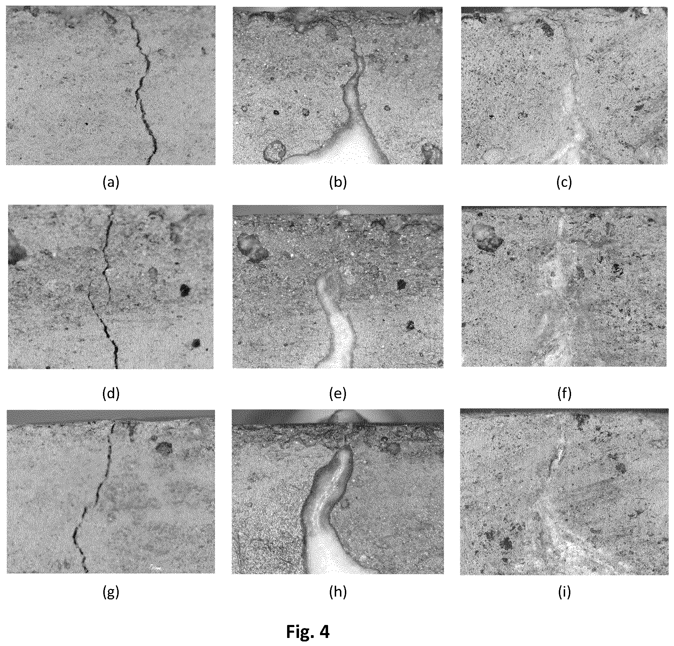

In an embodiment, the evaluation of the electrical mineral accumulation process was carried out for seven days under laboratory conditions. A plastic container with natural seawater was used to perform experiments. Three concrete samples and platinum-coated titanium were placed inside a plastic box, connected to a DC power supply, acting as cathode and anode, respectively. The experiments were performed with natural seawater. The process of electric mineral accumulation at the cathode was evaluated at 7 days of the experiment, mainly through photographs and microscope images, as shown in **Figure 3** **and** **4**, respectively.

In the experiment, the mineral precipitation was quite fast showing a large accumulation of mineral rock only seven days after, as shown in **Figure 3** **and** **4**. As shown in these figures, a white, gelatinous mineral material was precipitated on the crack. From the images in **Figure 3** it was possible to observe that electrodeposition is formed preferably on damaged area (crack).

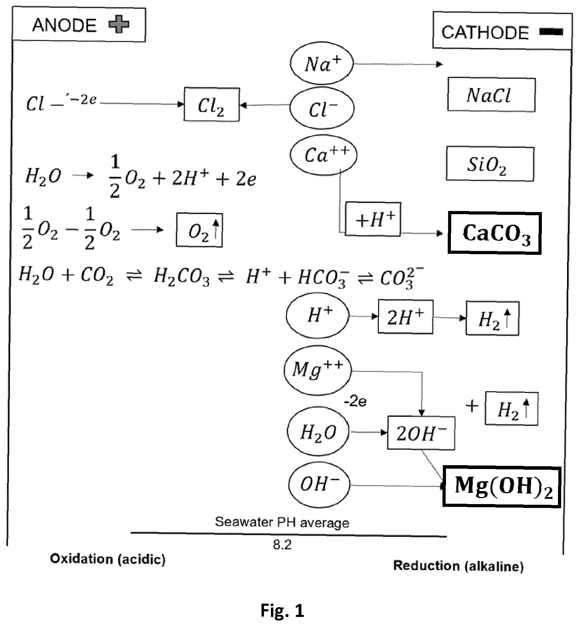

**Figure 1** shows a theoretical qualitative model for electrochemical processes involved in the accretion of minerals. The figure describes the chemical reactions provoked by the electrolytic process and how it formed the electrodeposited mineral materials like magnesium hydroxide chemically called Mg (OH)₂ and calcium carbonate chemically named CaCO₃, on the cathode.

**Figure 2** is a schematic diagram of an arrangement for mineral accretion following the present disclosure of a highly electrically conductive concrete submerged in seawater. The figure shows a schematic diagram of the setup used to initiate and maintain the mineral accretion through the electrolysis process under lab conditions. The damaged conductive concrete sample was deposited within a plastic box with sufficient seawater to cover the entire sample, functioning as cathode; and a platinum-titanium anode was also placed inside the plastic box. The electrical current was applied through the electrical power supply. The electrolytic process is initiated and the mineral accretion is processed on the cathode, the electrically conductive concrete sample. In this embodiment, a copper cable allows the electrical potential to be maintained at all points of the electrically conductive concrete. The electric current flows through concrete as shown in the present figure.

**Figures 3** **and** **4** illustrate the precipitation of minerals such as calcium carbonate and magnesium hydroxide on concrete through seawater electrolysis using the method outlined in **Figure 1** and **Figure 2****.** During the test, a box containing 30 liters of seawater and a voltage of 10 V were used. Three specimens of the same mixture with similar crack widths of approximately 0.3 mm were used for testing. **Figure 3** provides an overall view of each tested specimen, while **Figure 4** shows microscope images of the imposed crack on each specimen. In detail, **Figures 4 (a), (d)** and **(g)** exhibit the imposed crack before the healing process on the three specimens. **Figures 4 (b), (e)** and **(h)** show the crack appearance after one week of the healing process, and **Figures 4 (c), (f)** and **(i)** show the healed crack after removing the surface material, respectively. It is observed that the crack was effectively sealed. Consequently, these samples offer a compelling example of what can be achieved in just seven days of exposure to the electrolytic process with seawater, making it particularly valuable for the early stages of concrete, particularly under harsh and remote conditions. The experiment was conducted under laboratory conditions and a substantial amount of electrodeposited mineral materials were observed covering the entire cracks of conductive concrete effectively restoring the damaged area, in a few days.

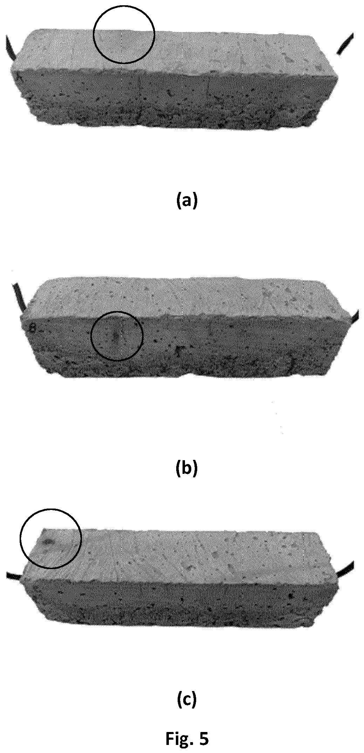

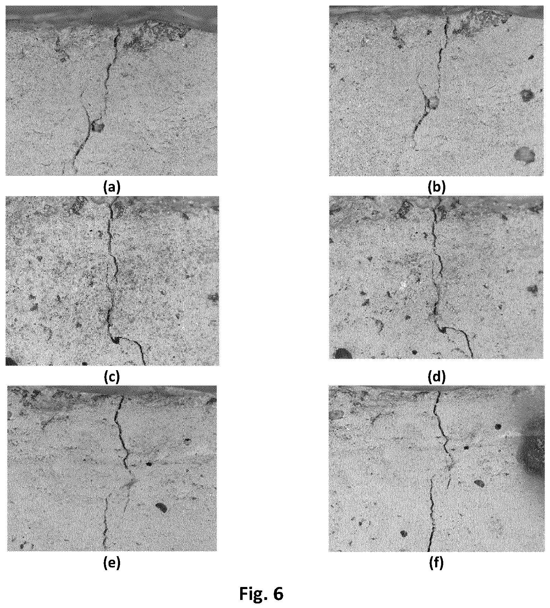

**Figures 5** **and** **6** illustrate an embodiment of a damaged concrete samples where electrodeposition was not induced. These samples were used as reference points for comparison with the samples that were subjected to electric current. During the test, a box containing 30 liters of seawater and no voltage was used. Three specimens of the same mixture with similar crack widths of approximately 0.3 mm were used for testing. **Figure 5** provides an overall view of each tested specimen showing the imposed crack, while **Figure 6** shows microscope images of the imposed crack on each specimen. In detail, **Figure 6 (a), (c)** and **(e)** exhibit the imposed crack before testing. **Figure 6 (b), (d)** and **(f)** show the crack after one week of testing. It is evident from the **Figure 6** that the crack remained unsealed. The experiment was conducted under laboratory conditions and no electrodeposited mineral materials were observed covering the cracks of conductive concrete.

**Figure 5** illustrates the reference concrete samples with noticeable signs of corrosion. When compared to other samples, it is clearly visible that the electric current induces cathodic protection, as demonstrated in **Figure 3** (not corroded).

The embodiments described above are combinable.

The inventor wishes to acknowledge the support by RENEw, POCI-01-0247-FEDER-033834, that was co-funded by Fundo Europeu de Desenvolvimento Regional (FEDER), with Programa Operacional da Competitividade e Internacionalização do Portugal 2020 (COMPETE 2020).

### References

1. Talaiekhozan, A., Keyvanfar A., Shafaghat A., Andalib R., Abd Majid M.Z., Fulazzaky M.A., Zin R.M., Lee C.T., Hussin M.W., Hamzah N., Marwar N.F., Haidar H.I. A Review of Self-healing Concrete Research Development., Volume 2, Issue 1, Pages: 1-11 (2014).
2. Jeon S., Hossain M., Han S., Choi P., Yun K. Self-healing characteristics of cement concrete containing expansive agent. Case Studies in Construction Materials 17 (2022).
3. Liu C., Zhang R., Liu H., nong X. Self-healing concrete with recycled coarse aggregate: Then performance of biochemical-chloride ion transport. Journal of Building Engineering 57 (2022).
4. Hermawan H., Minne P., Serna P., Gruyaert E. Understanding the Impacts of Healing Agents on the Properties of Fresh and Hardened Self-Healing Concrete: A Review. Processes 2021, 9, 2206.
5. Zhan Q., Dong W., Fu C., Wang A., Yi H. The self-healing of marine concrete cracks based on the synergistic effect of microorganisms and inorganic minerals. Journal of Building Engineering 61 (2022).
6. Wang X., Liang J., Ren J., Wang W., Liu J., Xing F. Performance of microcapsule-based self-healing concrete under multiaxial compression with large axial strain: Mechanical properties failure mode, and pore structure. Construction and Building Materials 350 (2022).
7. Liu Y., Zhuge Y., Fan W., Duan W., Wang L. Recycling industrial wastes into self-healing concrete: A review. Environmental Research 214 (2022).
8. Jiang L., Lu W., Wang W., Zhang Y., Han Q., Li Z., Mechanical properties and frost resistance of self-healing concrete based on expended perlite immobilized bacteria. Construction and Building Materials 348 (2022).
9. Han R., Xu S., Zhang J., Liu Y., Zhou A. Insights into the effects of microbial consortiaenhanced recycled concrete aggregates on crack self-healing in concrete. Construction and Building Materials 343 (2022).
10. Lauch K.-S., Charron J.-P., Desmesttre C. Comprehensive evaluation of self-healing of concrete with different admixtures under laboratory and long-term outdoor expositions. Journal of Building Engineering 54 (2022).
11. Sohail M., Disi Z., Zouari N., Nuanimi N.a., Kahraman R., Gencturk B., Rodrigues D. F., Yildirim Y. Bio self-healing concrete using MICP by an indigenous Bacillus cereus strain isolated from Qatari soil. Construction and Building Materials 328 (2022).
12. Kim R., Woo U., Shin M., Ahn E., Choi H. Evaluation of self-healing in concrete using linear and nonlinear resonance spectroscopy. Construction and Building Materials 335 (2022).
13. Bagga M., Hamley-Bennett C., Alex A., Freeman B. L., Justo-Reinoso I., Mihai I. C., Gebhard S., Paine K., Jefferson A. D., Masoero E., Ofit,eru I. D. Advancements in bacteria based self-healing concrete and the promise of modelling. A review. Construction and Building Materials 358 (2022).
14. Yatish Reddy P. V., Ramesh B., Kumar L. P. Influence of bacteria in self-healing of concrete - a review. Materials Today: Proceedings 33 (2020).
15. US Patent No. 4.440.605, Inventor Wolf H. Hilbertz. "Repair of reinforced concrete by mineral accretion". April.1984.
16. US Patent No. 4.246.075, January.1981, Inventor Wolf H. Hilbertz. "Mineral accretion of large surface structures".

## Claims

1. Sustainable self-healing marine concrete comprising:
a concrete matrix comprising cementitious material;
at least 50% (w/w) of electrically conductive material; wherein the electrically conductive material is in the form of aggregates, and fibers;
at least 5% (w/w) of water;
at least 0.10% (w/w) of additive; and
fine additions.

2. Self-healing marine concrete according to the previous claim, wherein the concrete has an electrical resistivity equal or lower than 0.3 Ω. *m* , preferably from 1.0 × 10⁻⁷ Ω.*m* to 0.3 Ω. *m*.

3. Self-healing marine concrete according to any of the previous claims wherein the amount of electrically conductive aggregates is from 50% (w/w) to 70% (w/w), preferably 55% (w/w) to 68 % (w/w), more preferably 62%-65% (w/w).

4. Self-healing marine concrete according to any of the previous claims wherein the conductive aggregate is selected from steel, iron, copper, aluminum, carbon, graphite or combinations thereof, preferably residues and/or wherein the electrically conductive aggregate has a density from 1800 kg/m³ - 3580kg/m³.

5. Self-healing marine concrete according to any of the previous claims 3 to 4 wherein the conductive aggregate size is from 0-50 mm, preferably from 0-4 mm.

6. Self-healing marine concrete according to any of the previous claims wherein 0.1% (w/w) of the electrically conductive material is electrically conductive fibers including carbon fibers, preferably recycled fiber, and wherein the density of conductive fibers is from 1800 kg /m³ - 7850 kg /m³.

7. Self-healing marine concrete according to of the previous claim wherein the electrically conductive fibers are made of carbon, steel or any other conductive material, including electrically conductive recycled fibers.

8. Self-healing marine concrete according to any of the previous claims wherein the amount of the fine additions is at least 5% (w/w), preferably from 15%-20% (w/w) and/or wherein the fine additions are selected from a list comprising: fly ashes, electric arc furnace slag powder, carbon powder, graphite, and/or conductive residues and/or wherein the fine additions are electrically conductive.

9. Self-healing marine concrete according to any of the previous claims wherein the additives are selected from a list consisting of superplasticizer, plasticizer, and viscosity modifying agent, or combinations thereof.

10. Use of a concrete described in any of the previous claims as a self-healing marine concrete.

11. A method for producing self-healing marine concrete according to any of the previous claims, comprising the steps of:
mixing concrete matrix comprising cementitious material, water and additives to form a concrete mixture;
incorporating at least 50% (w/w) of electrically conductive material; wherein the electrically conductive material is in the form of aggregate and fibers into said concrete mixture to produce a self-healing concrete;
incorporate fine additions.

12. Method of regenerating the self-healing marine concrete according to any of the previous claims, comprising:
immersing a fractured concrete in an electrolyte solution, preferably the electrolyte has a salinity equal to the salinity of seawater;
connecting the concrete to a direct current electric circuit;
subjecting the concrete to direct electric current to form a bioactive concrete and allow mineral accretion to form a mineral layer on the concrete damage and surface.

13. Method according to the previous claim 12, wherein the solution of electrolyte is artificial seawater or natural seawater.

14. Method according to any of the previous claims 12 to 13, wherein the concrete is subjected to direct electrical current for at least 1 day and/or wherein the voltage is between 1 volt and 100 volts and an electric current is between 1 milli-amperes and 20 amperes.

15. Method according to any of the previous claims 12 to 14 wherein the electric circuit comprises an electric power supply with direct current, a highly electrically conductive concrete functioning as a cathode arranged to be connected to a conductive wire, and an electrode functioning as an anode, preferably the electric circuit is a direct current electric circuit.
